(19) Europäisches Patentamt
European Patent Office
Office européen des brevets

(11) EP 3 225 474 A1

(12) EUROPEAN PATENT APPLICATION
published in accordance with Art. 153(4) EPC

(43) Date of publication:
04.10.2017 Bulletin 2017/40

(51) Int Cl.:
B60T 8/00 (2006.01)          B60T 7/12 (2006.01)
B60W 30/08 (2012.01)        G08G 1/16 (2006.01)

(21) Application number: 15863485.7

(22) Date of filing: 27.11.2015

(86) International application number:
PCT/JP2015/083507

(87) International publication number:
WO 2016/084968 (02.06.2016 Gazette 2016/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.11.2014 JP 2014242295

(71) Applicants:
• Advics Co., Ltd.
Kariya-shi, Aichi 448-8688 (JP)

• TOYOTA JIDOSHA KABUSHIKI KAISHA
Toyota-shi, Aichi-ken 471-8571 (JP)

(72) Inventors:
• OHMORI, Yosuke
Kariya-shi
Aichi 448-8688 (JP)
• IKE, Wataru
Toyota-shi
Aichi 471-8571 (JP)

(74) Representative: Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)

(54) COLLISION AVOIDANCE DEVICE

(57) A collision avoidance device includes, for example, a collision avoidance executor that can execute avoidance braking for avoiding collision with an object to be avoided; a determiner that determines whether a brake pedal is operated by a driver; and a collision avoidance controller that inhibits execution of the avoidance braking from ending and controls braking to apply a brake with a larger one of a required braking force through the operation of the brake pedal and a braking force by the avoidance braking, when the driver operates the brake pedal during the avoidance braking.

FIG.2

**Description**

TECHNICAL FIELD

The present invention relates to a collision avoidance device.

BACKGROUND ART

In recent years, collision avoidance devices have been known which apply a brake to a vehicle by automatic braking, for example, to avoid colliding with a preceding vehicle ahead in traveling direction when an inter-vehicle distance to the preceding vehicle decreases to a certain distance or below.

CITATION LIST

Patent Literature

Patent Document 1: Japanese Examined Patent Publication No. S55-015337
Patent Document 2: Japanese Patent Application Laid-open Publication No. 8-119004
Patent Document 3: Japanese Patent Application Laid-open Publication No. 2012-121534

SUMMARY OF INVENTION

PROBLEM TO BE SOLVED BY THE INVENTION

In such a conventional collision avoidance device, during the avoidance braking, a driver's intention to increase a deceleration may not be reflected in vehicle running. To deal with a change in the state of the vehicle from a collision avoidable state by a brake application to a collision unavoidable state due to a deceleration of a vehicle ahead, prompt generation of a required deceleration is desirable.
Thus, it is an object of the present invention to provide a collision avoidance device that can reflect a driver's intention of deceleration in the driving of a vehicle equipped with a collision avoidance function and quickly generate a deceleration required for the avoidance braking.

MEANS FOR SOLVING PROBLEM

A collision avoidance device according to the present invention comprises, for example, a collision avoidance executor that can execute avoidance braking for a vehicle to avoid collision with an object to be avoided; a determiner that determines whether a brake pedal is operated by a driver; and a collision avoidance controller that inhibits execution of the avoidance braking from ending and controls braking to apply a brake with a larger one of a required braking force through the operation of the brake pedal and a braking force by the avoidance braking, when the driver operates the brake pedal during the avoidance braking.
In the collision avoidance device, the collision avoidance controller further inhibits, when the brake pedal is operated during the avoidance braking, ending of an issuance of a notification that the avoidance braking is to be applied.
In the collision avoidance device, the collision avoidance controller further inhibits or ends, when the brake pedal is operated during the avoidance braking, an issuance of an alarm that the avoidance braking needs to be applied.

BRIEF DESCRIPTION OF DRAWINGS

FIG. 1 is a schematic diagram illustrating an exemplary configuration of a vehicle according to an embodiment of the present invention;
FIG. 2 is a block diagram illustrating an exemplary functional configuration of a collision avoidance electronic control unit (ECU) according to the embodiment;
FIG. 3 is a flowchart of an exemplary procedure of execution of a collision avoidance function according to the embodiment;
FIG. 4 is a schematic diagram illustrating an example of a shortened relative distance to a preceding vehicle in the embodiment;

FIG. 5 is a diagram illustrating a start of braking by a driver and a change in deceleration caused by a start of avoidance braking;

FIG. 6 is a flowchart of an exemplary procedure of determination on inhibition or ending of execution of the collision avoidance function according to the embodiment;

FIG. 7 is a diagram separately illustratin010g an example of changes in a deceleration required for the avoidance braking and in a required deceleration through an operation of a brake pedal by a driver according to the embodiment; and

FIG. 8 is a diagram illustrating an example of a change in deceleration under the control according to the embodiment.

DESCRIPTION OF EMBODIMENT

An exemplary embodiment of the present invention will be disclosed below. Configurations of the embodiment to be given below and operations and results (effects) provided by the configurations are merely examples. The present invention can also be carried out with other configurations than those disclosed in the following embodiment. The present invention can attain at least one of the various effects (including derivative effects) obtained by the configurations.

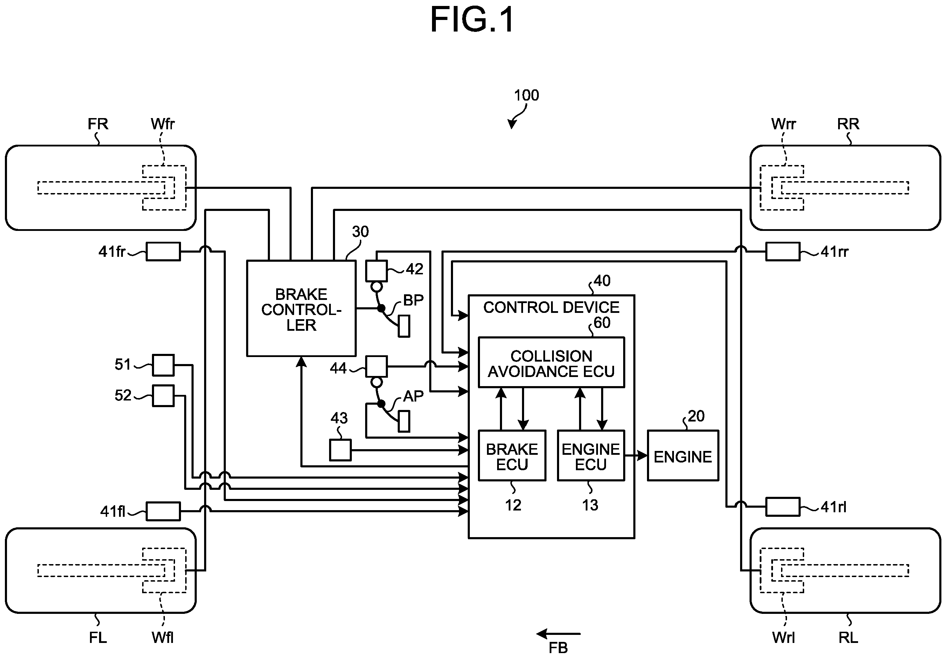

FIG. 1 is a schematic diagram illustrating an exemplary configuration of a vehicle according to the embodiment. In the present embodiment, a vehicle 100 may be, for example, an automobile (internal combustion engined automobile) using an internal combustion engine (engine 20) as a driving source, an automobile (such as an electric vehicle or a fuel-cell vehicle) using an electric motor (motor, which is not illustrated) as the driving source, or an automobile (hybrid automobile) using both an internal combustion engine and an electric motor as driving sources. The vehicle 100 can be equipped with various types of transmissions and various types of devices (such as systems and components) needed for driving the internal combustion engine or the electric motor. For example, systems, numbers, and layouts of devices for driving wheels on the vehicle can be variously set. In the present embodiment, as an example, the vehicle 100 is a four-wheel vehicle (four-wheel automobile), and includes two left and right front wheels FL and FR and two left and right rear wheels RL and RR. The front side in a vehicle front-rear direction (arrow FB) corresponds to the left side in FIG. 1.

As illustrated in FIG. 1, the vehicle 100 of the present embodiment includes an engine 20, a brake controller 30, an imaging device 51, a radar 52, a brake switch 42, an accelerator pedal stroke sensor 44, a front-rear directional acceleration sensor 43, and a control device 40.

The vehicle 100 also includes wheel cylinders Wfr and Wfl and wheel speed sensors 41fr and 41fl corresponding to the two front wheels FR and FL, respectively, and includes wheel cylinders Wrr and Wrl and wheel speed sensors 41rr and 41rl corresponding to the two rear wheels RR and RL, respectively. Hereinafter, the wheel speed sensors 41fr, 41fl, 41rr, and 41rl may be collectively referred to as wheel speed sensors 41, and the wheel cylinders Wfr, Wfl, Wrr, and Wrl may be collectively referred to as wheel cylinders W.

Although the vehicle 100 includes basic components as the vehicle 100 in addition to the components illustrated in FIG. 1, description will herein be given of only relevant configurations of the vehicle 100 and control over the configurations.

The imaging device 51 is, for example, a digital camera incorporating an image pickup device, such as a charge-coupled device (CCD) or a complementary metal-oxide semiconductor (CMOS) image sensor (CIS). The imaging device 51 can output image data (moving image data or frame data) at a certain frame rate. In the present embodiment, the imaging device 51 is located at a front-side end (end in a plan view) (front side in the vehicle front-rear direction) of a vehicle body (not illustrated), and can be provided, for example, on a front bumper. The imaging device 51 outputs image data including an object to be avoided, such as a preceding vehicle 501 ahead of the vehicle.

The radar 52 is, for example, a millimeter-wave radar. The radar 52 can output, for example, distance data indicating the distance (separation or detected distance) to the object to be avoided such as the preceding vehicle, and velocity data indicating relative speed (velocity) to the object to be avoided. The control device 40 updates results of measuring the distance by the radar 52 between the vehicle 100 and the object to be avoided as the preceding vehicle, and stores the updated results in a storage at appropriate times (for example, at certain time intervals). The updated distance measurements can be used for calculation.

Each of the wheel speed sensors 41 outputs a pulse signal upon every rotation of the corresponding wheel by a certain angle.

The accelerator pedal stroke sensor 44 is provided for an accelerator pedal AP to detect the stroke of the accelerator pedal AP by the driver. The brake switch 42 is provided for a brake pedal BP to output a brake operation signal indicating operation or non-operation to the brake pedal BP by the driver. Specifically, the brake switch 42 outputs an ON (High) brake operation signal when the brake pedal BP is operated, and outputs an OFF (Low) brake operation signal when the brake pedal BP is not operated.

The front-rear directional acceleration sensor 43 detects the acceleration of the vehicle body in the front-rear direction (front-rear acceleration), and outputs a signal representing a front-rear acceleration Gx.

The engine 20 outputs power in accordance with the operation of the accelerator pedal AP by the driver. In response to a command from a brake electronic control unit (ECU) 12, the brake controller 30 controls the wheels FR, FL, RR, and RL to generate braking forces with brake fluid pressure. The brake controller 30 produces the brake fluid pressure corresponding to an operating force applied to the brake pedal BP, and can adjust the supply of the brake fluid pressure to the wheel cylinders Wfr, Wfl, Wrr, and Wrl disposed for the wheels FR, FL, RR, and RL, respectively.

That is, the brake controller 30 includes a master cylinder that generates master cylinder hydraulic pressure according to the operation of the brake pedal BP by the driver, a pressure pump that can generate additional hydraulic pressure for generating higher hydraulic pressure than the master cylinder hydraulic pressure, and a linear solenoid valve that can adjust an additional pressure (differential pressure) to the master cylinder hydraulic pressure using an additional liquid delivered from the pressure pump (all not illustrated). For avoidance braking in response to the command from the brake ECU 12, the brake controller 30 controls the pressure pump and the linear solenoid valve to adjust the additional pressure. The brake controller 30 supplies thus generated master cylinder hydraulic pressure added with the additional pressure as the brake fluid pressure to the wheel cylinders Wfr, Wfl, Wrr, and Wrl, to thereby control a hydraulic pressure braking force and apply the braking force to the vehicle 100 independently from braking through the operation of the brake pedal BP.

The control device 40 receives signals and data from the respective elements of the vehicle 100 to control them. As illustrated in FIG. 1, the control device 40 mainly includes a collision avoidance electronic control unit (ECU) 60, the brake ECU 12, and an engine ECU 13. In the present embodiment, the control device 40 is an example of a collision avoidance device.

The engine ECU 13 handles various types of control of the engine 20, including fuel injection control and air-intake adjustment control.

The brake ECU 12 handles, for example, braking torque adjustment control over the vehicle and each of the wheels FR, FL, RR, and RL. The brake ECU 12 calculates, for example, the vehicle-body speed of the vehicle based on a detection signal from at least one of the wheel speed sensors 41 provided for the respective wheels FR, FL, RR, and RL, and the deceleration of the vehicle based on a detection signal from the front-rear directional acceleration sensor 43, and transmits the resultants to the other ECUs. The deceleration as calculated herein exhibits a positive value while the vehicle is decelerating and exhibits a negative value while the vehicle is accelerating.

The collision avoidance ECU 60 controls a collision avoidance function to execute. The details of the collision avoidance ECU 60 will be described later. Each of the ECUs is configured as a computer, and includes an arithmetic processor (not illustrated) such as a central processing unit (CPU), and a storage (storage 65 in the collision avoidance ECU 60) including a read-only memory (ROM), a random access memory (RAM), or a flash memory.

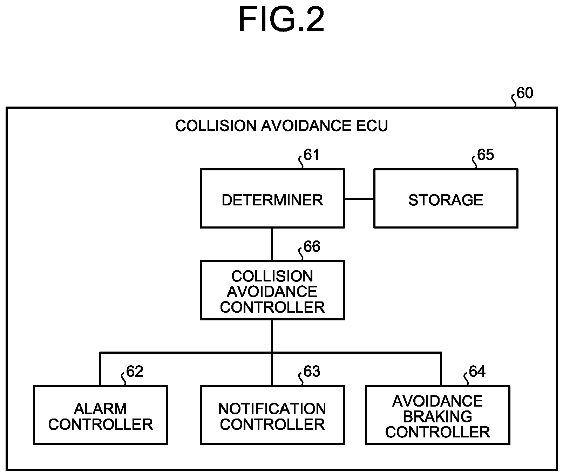

The arithmetic processor reads a program stored (installed) in a nonvolatile storage (such as a ROM or a flash memory), executes calculations according to the program, and serves as each of the ECUs. In particular, the collision avoidance ECU 60 functions (operates) as the respective elements illustrated in FIG. 2 (to be described later). The storage can store, for example, data (such as tables (data groups) and functions) used in various calculations for the controls, and results of calculations (including values under calculation).

The configuration of the vehicle 100 described above is merely an example, and can be modified in various forms. Known devices can be used as the individual units of the vehicle 100. The elements of the vehicle 100 can be shared with each other. The vehicle 100 can include a sonar to detect the object to be avoided.

The following describes the details of the collision avoidance ECU 60. FIG. 2 is a block diagram illustrating an exemplary functional configuration of the collision avoidance ECU 60 according to the present embodiment. The collision avoidance ECU 60 of the present embodiment can function (operate) as a determiner 61, a collision avoidance controller 66, an alarm controller 62, a notification controller 63, and an avoidance braking controller 64, as illustrated in FIG. 2, through cooperation between hardware and software (program). That is, the program can include modules corresponding to the blocks excluding the storage 65, illustrated in FIG. 2, as an example. The alarm controller 62, the notification controller 63, and the avoidance braking controller 64 are examples of a collision avoidance executor.

The collision avoidance controller 66 controls execution of the collision avoidance function. The collision avoidance function is a function to maintain a certain relative distance between the preceding vehicle as the object to be avoided and the vehicle so as to avoid collision with the preceding vehicle. The collision avoidance function specifically includes avoidance braking, notifying, and alarming. The avoidance braking is also called automatic braking to apply a brake to the vehicle with the brake ECU 12 and the brake controller 30 to maintain the relative distance between the preceding vehicle and the vehicle. The notifying is outputs of sound from a speaker (not illustrated) provided, for example, ahead of the driver's seat, indicating that the avoidance braking is to be activated. The alarming is outputs of sound from the speaker (not illustrated), urging the activation of the avoidance braking. The notifying and the alarming differ in output sound.

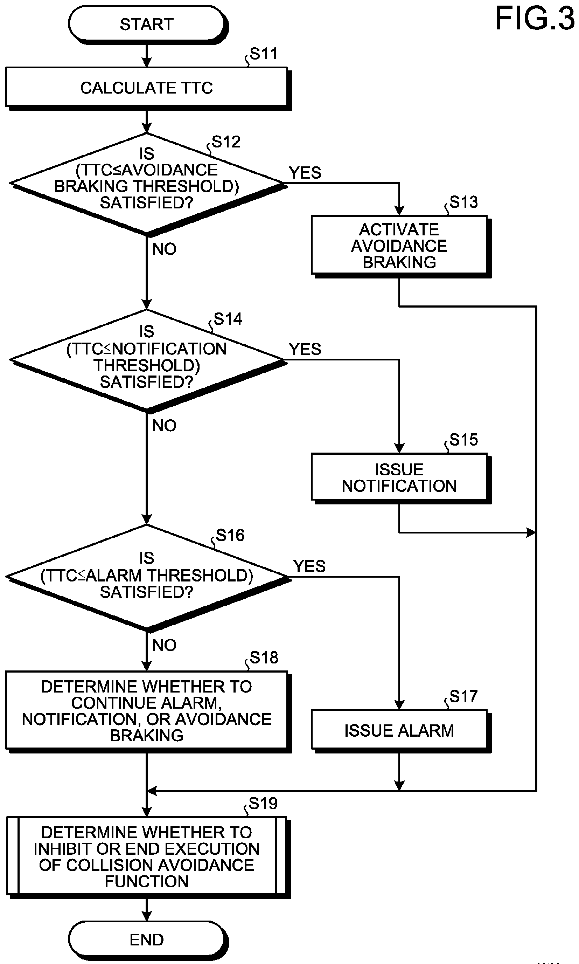

Processing in each step of the collision avoidance function is performed in the following manner. FIG. 3 is a flowchart of a procedure of executing the collision avoidance function according to the present embodiment.

First, the collision avoidance controller 66 calculates a time to collision TTC as an estimated time to collision with the preceding vehicle (S11). The collision avoidance controller 66 can calculate the time to collision TTC by Expression (2) based on the following equation of motion (1).

$$\frac{1}{2}\alpha_{AB}t^2 + V_{AB}t + X_{AB} = 0 \tag{1}$$

$$t = \frac{-V_{AB} - \sqrt{V_{AB}^2 - 2\alpha_{AB}X_{AB}}}{\alpha_{AB}} \tag{2}$$

t denotes the time to collision TTC. $V_{AB}$ denotes the relative speed of the vehicle with respect to the preceding vehicle. $X_{AB}$ denotes the relative distance from the vehicle to the preceding vehicle. $\alpha_{AB}$ denotes the relative acceleration of the vehicle with respect to the preceding vehicle. The collision avoidance controller 66 can calculate $V_{AB}$ based on a result of the detection by any of the wheel speed sensors 41, calculate $\alpha_{AB}$ based on a result of the detection by the front-rear directional acceleration sensor 43, and calculate $X_{AB}$ based on a result of the detection by the radar 52.

If the value of t or the value in the square root operator in Expression (2) is negative, the collision avoidance controller 66 calculates t as the time to collision TTC by the following expression.

$$t = X_{AB}/V_{AB}$$

Then, the collision avoidance controller 66 determines whether the time to collision TTC is equal to or smaller than a certain avoidance braking threshold (S12). When determining that the time to collision TTC is equal to or smaller than the avoidance braking threshold (Yes at S12), the collision avoidance controller 66 transmits an avoidance braking command to the avoidance braking controller 64 to activate the avoidance braking (S13). That is, upon receiving the command, the avoidance braking controller 64 instructs the brake ECU 12 to apply a brake. Thus, the brake controller 30 applies braking.

If the time to collision TTC is greater than the avoidance braking threshold (No at S12), the collision avoidance controller 66 determines whether the time to collision TTC is equal to or smaller than a certain notification threshold (S14). The notification threshold is lower than the avoidance braking threshold. Determining that the time to collision TTC is equal to or smaller than the notification threshold (Yes at S14), the collision avoidance controller 66 transmits a notification command to the notification controller 63 to issue a notification (S15). That is, the notification controller 63 outputs a message of activation of the avoidance braking from the speaker.

Determining that the time to collision TTC is greater than the notification threshold (No at S14), the collision avoidance controller 66 determines whether the time to collision TTC is equal to or smaller than a certain alarm threshold (S16). The alarm threshold is lower than the notification threshold. Determining that the time to collision TTC is equal to or smaller than the alarm threshold (Yes at S16), the collision avoidance controller 66 transmits an alarm command to the alarm controller 62 to issue an alarm (S17). That is, the alarm controller 62 outputs a message of an urgent need for the avoidance braking from the speaker.

Determining that the time to collision TTC is greater than the alarm threshold (No at S16), the collision avoidance controller 66 determines whether to continue the alarm, the notification, or the avoidance braking (step S18). The continuance determination on the alarm, the notification, or the avoidance braking is a process to determine whether to continue the control of the alarm, the notification, or the avoidance braking when the time to collision TTC is increased by, for example, a deceleration of the vehicle or an advance of the preceding vehicle.

After determining the continuance of the alarm, the notification, or the avoidance braking or after activating the alarm, the notification, or the avoidance braking, the collision avoidance controller 66 determines whether to inhibit or end the execution of the collision avoidance function (S19). This determination is a process to determine whether to inhibit or end the execution of the collision avoidance function including the alarming, the notifying, and the avoidance braking based on the operation of the brake pedal BP. The inhibiting or ending process of the collision avoidance function is also called a brake override process.

The following describes the inhibition or ending determination on the execution of the collision avoidance function of the present embodiment.

Referring back to FIG. 2, the determiner 61 receives the brake operation signal from the brake switch 42, to determine whether the brake pedal BP is operated based on ON or OFF of the brake operation signal. That is, the determiner 61 determines from ON of the brake operation signal that the driver is operating the brake pedal BP, and determines from OFF of the brake operation signal that the driver is not operating the brake pedal BP.

During the avoidance braking (automatic braking), even when the determiner 61 determines that the brake pedal BP is operated by the driver, that is, at the time of simultaneous executions of the avoidance braking and the braking with the brake pedal BP, the collision avoidance controller 66 does not end the execution of the avoidance braking (inhibits the avoidance braking from ending). In particular, even when the driver has applied braking to the brake pedal BP earlier, the collision avoidance controller 66 starts activating avoidance braking based on the time to collision TTC (that is, does not inhibit the activation of the avoidance braking). The collision avoidance controller 66 does not end the avoidance braking because the avoidance braking is working due to the determination that the braking with the brake pedal BP cannot avoid the collision.

When activating the collision avoidance function (alarm, notification, or avoidance braking), the collision avoidance controller 66 stores, as a flag, information indicating which item of the collision avoidance function, that is, alarming, notifying, and avoidance braking is activated in the storage 65. The collision avoidance controller 66 determines whether the avoidance braking is working, with reference to the flag in the storage 65.

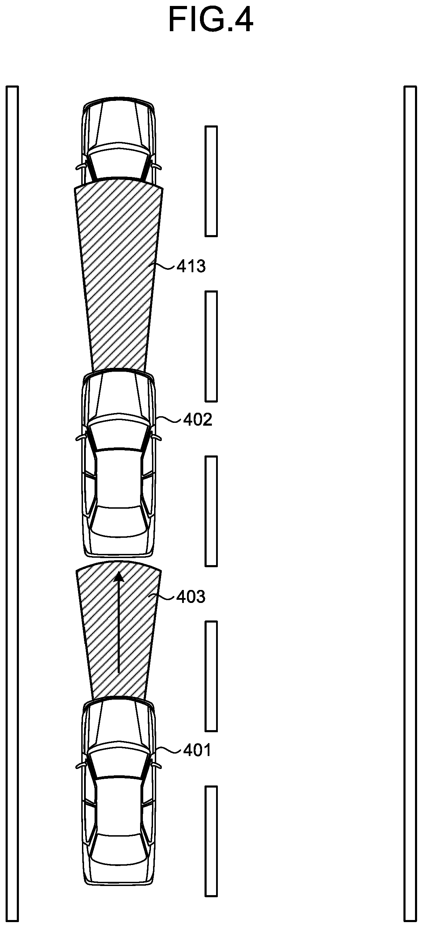

FIG. 4 is a schematic diagram illustrating an example of a shortened relative distance to the preceding vehicle in the present embodiment. FIG. 4 assumes that the driver starts applying a brake onto the brake pedal BP when the vehicle is in a position indicated by reference numeral 401. In this position, the preceding vehicle is not located in a collision unavoidable region 403, so that the collision avoidance function is inactivated. When the vehicle while applying a brake with the brake pedal BP advances to a position indicated by reference numeral 402, the preceding vehicle enters a collision unavoidable region 413. That is, the time to collision TTC falls to the threshold or below, activating the avoidance braking.

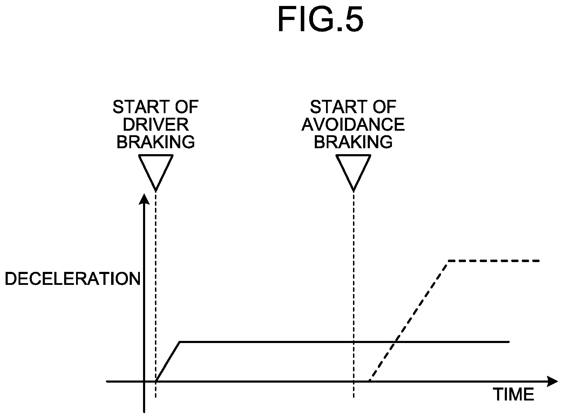

FIG. 5 is a diagram illustrating the start of the braking by the driver and a change in deceleration caused by the start of the avoidance braking. In FIG. 5, the horizontal axis represents time, and the vertical axis represents the deceleration. As illustrated in FIG. 5, the driver's brake application onto the brake pedal BP is insufficient for a driver's required deceleration in the position 401 in FIG. 4, so that the collision is unavoidable. This is because the avoidance braking controller 64 starts avoidance braking control based on a deceleration necessary for avoiding the collision. Because of this, in the present embodiment, the collision avoidance controller 66 refrains from inhibiting or ending the execution of the avoidance braking which is activated while the driver is applying a brake to the brake pedal BP.

As a result, however, a driver's intention to put a brake on the vehicle 100 with the brake pedal BP is not reflected in the vehicle running. In the present embodiment, when the determiner 61 determines that the driver is applying a brake to the brake pedal BP during the avoidance braking (automatic braking), the collision avoidance controller 66 controls the brake ECU 12 so as to output a braking force at a larger one of the deceleration (required deceleration) required through the operation of the brake pedal BP and the deceleration by the avoidance braking.

For example, ending the avoidance braking upon the operation of the brake pedal BP falls into the following situation. During the avoidance braking, the driver applies a brake to the brake pedal BP to avoid the collision with the preceding vehicle, which terminates the avoidance braking and brakes the vehicle through the braking. This brings the vehicle into a collision avoidable state with the preceding vehicle. However, it is still possible for the vehicle to be placed in a collision unavoidable state if the preceding vehicle decelerates, decreasing the relative distance thereto.

For such a case, the avoidance braking is activated based on the time to collision TTC. Upon start of the activation of the avoidance braking, the pressure pump in the brake controller 30 generates additional hydraulic pressure and the linear solenoid valve controls the additional pressure amount to apply the brake fluid pressure added with the additional pressure amount to the wheel cylinders W for the wheels FR, FL, RR, and RL. This, however, starts applying the additional pressure to the wheel cylinders W for the wheels FR, FL, RR, and RL, which have been applied with the brake fluid pressure by the driver's operation of the brake pedal BP. This may result in a delay in response of the pressure pump in the brake controller 30, causing a delay in the generation of the additional hydraulic pressure (delay in the pressurization) and making it difficult to quickly produce the required deceleration.

However, in the present embodiment, even at the time of simultaneous braking applications through the operation of the brake pedal BP by the driver and the avoidance braking, the avoidance braking is not ended, and in addition, a larger one of the braking force through the operation of the brake pedal BP by the driver and the braking force by the avoidance braking is output.

Specifically, when the deceleration by the operation of the brake pedal BP by the driver is larger than the deceleration by the avoidance braking, that is, when the deceleration by the driver's operation of the brake pedal BP can avoid collision, the collision avoidance controller 66 gives priority to the operation of the driver by outputting the braking force by the operation of the brake pedal BP.

Meanwhile, when the deceleration by the avoidance braking is larger than the deceleration by the operation of the brake pedal BP, the collision avoidance controller 66 gives priority to the deceleration by the avoidance braking, and outputs the braking force by the avoidance braking. In this avoidance braking, only a deceleration necessary for avoiding the collision is outputted, and the braking force by the avoidance braking complements insufficient braking force by the driver's operation of the brake pedal BP for avoiding the preceding vehicle. Thereby, the amount of intervention of the avoidance braking can be minimized, which enables the braking control without sacrificing the operability of the driver.

In the present embodiment, to preferentially output the braking force through the operation of the brake pedal BP, in response to the command from the collision avoidance controller 66 through the avoidance braking controller 64 and the brake ECU 12, the brake controller 30 outputs the braking force by applying the brake fluid pressure to the wheel cylinders W for the wheels FR, FL, RR, and RL in accordance with the operation of the brake pedal BP. In contrast, to preferentially output the braking force by the avoidance braking, in response to the command from the collision avoidance controller 66 through the avoidance braking controller 64 and the brake ECU 12, the brake controller 30 controls the linear solenoid valve to adjust the amount of additional pressure and the pressure pump to generate the additional pressure to complement insufficient brake fluid pressure according to the operation of the brake pedal BP for avoiding the preceding vehicle. Thereby, the brake controller 30 applying the resultant brake fluid pressure to the wheel cylinders W for the wheels FR, FL, RR, and RL for avoidance braking. As a result, the required deceleration can be quickly produced without a delay in the response of the pressure pump.

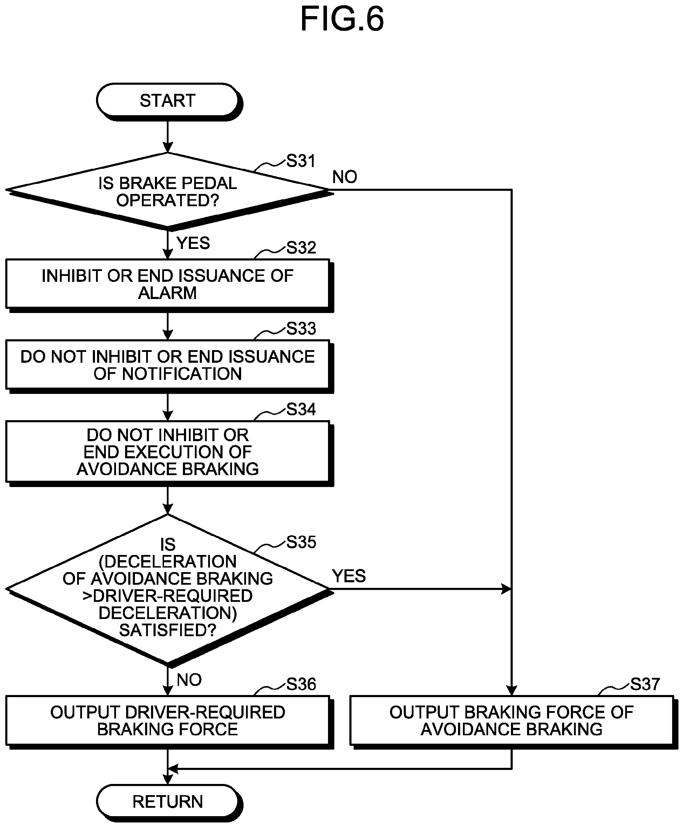

The following describes a flow of such a determination process on inhibition or ending of the execution of the collision avoidance function (S19 of FIG. 3) according to the present embodiment. FIG. 6 is a flowchart of an exemplary procedure of the determination on inhibition or ending of the execution of the collision avoidance function according to the present embodiment. The processing of FIG. 6 is executed individually when the avoidance braking is activated at S13 of FIG. 3, when the notification is issued at S15 of FIG. 3, and when the alarm is issued at S17 of FIG. 3.

First, the determiner 61 determines whether the brake operation signal output from the brake switch 42 is ON so as to determine detection or non-detection of the operation of the brake pedal BP (S31). With no operation of the brake pedal BP by the driver (No at S31), the avoidance braking controller 64 controls the brake ECU 12 to output the braking force based on the required deceleration for the avoidance braking (S37), in response to the command from the collision avoidance controller 66.

At S31, when the brake pedal BP is operated by the driver (Yes at S31), the collision avoidance controller 66 controls the alarm controller 62 to inhibit or end the issuance of the alarm (S32). That is, from the operation of the brake pedal BP before the alarm output, the driver is determined to have become aware of proximity to the object to be avoided by himself or herself, and stepped on the brake pedal BP. Thus, the collision avoidance controller 66 controls the alarm controller 62 so as not to issue the alarm. From the operation of the brake pedal BP after the alarm output, the driver is determined to have become aware of proximity to the object to be avoided by the alarm, and have stepped on the brake pedal BP. Consequently, the collision avoidance controller 66 controls the alarm controller 62 so as to end the issuance of the alarm.

The collision avoidance controller 66 controls the notification controller 63 so as not to inhibit or end the issuance of the notification (S33). That is, to notify the driver of a dangerous situation the vehicle 100 is in, that is, too close to the object to be avoided and will come into collision unless the avoidance breaking is activated, the collision avoidance controller 66 controls the notification controller 63 so as not to end or inhibit the issuance of the notification in response to the operation of the brake pedal BP.

The collision avoidance controller 66 also controls the avoidance braking controller 64 so as not to inhibit or end the execution of the avoidance braking (S34).

Then, the determiner 61 determines whether the deceleration required by the avoidance braking is larger than the required deceleration by the operation of the brake pedal BP by the driver (S35). This required deceleration is calculated by the brake ECU 12 based on the detection signal from the front-rear directional acceleration sensor 43, and is received by the determiner 61. The determiner 61 may be configured to receive the detection signal from the front-rear directional acceleration sensor 43, and to calculate the deceleration.

If the deceleration required by the avoidance braking is larger than the required deceleration by the operation of the brake pedal BP by the driver (Yes at S35), the collision avoidance controller 66 gives an avoidance braking command to the avoidance braking controller 64, and the avoidance braking controller 64 controls the brake ECU 12 so as to output the braking force based on the required deceleration for the avoidance braking (S37).

If the deceleration required by the avoidance braking is equal to or smaller than the required deceleration by the operation of the brake pedal BP by the driver (No at S35), the collision avoidance controller 66 controls the brake ECU 12 so as to output the braking force (driver-required braking force) based on the required deceleration by the operation of the brake pedal BP (S36). Then, the process ends.

As described above, at the time of simultaneous brake applications through the operation of the brake pedal BP by the driver and the avoidance braking, the braking force is applied according to a larger one of the deceleration for the avoidance braking and the required deceleration by the driver's operation of the brake pedal BP.

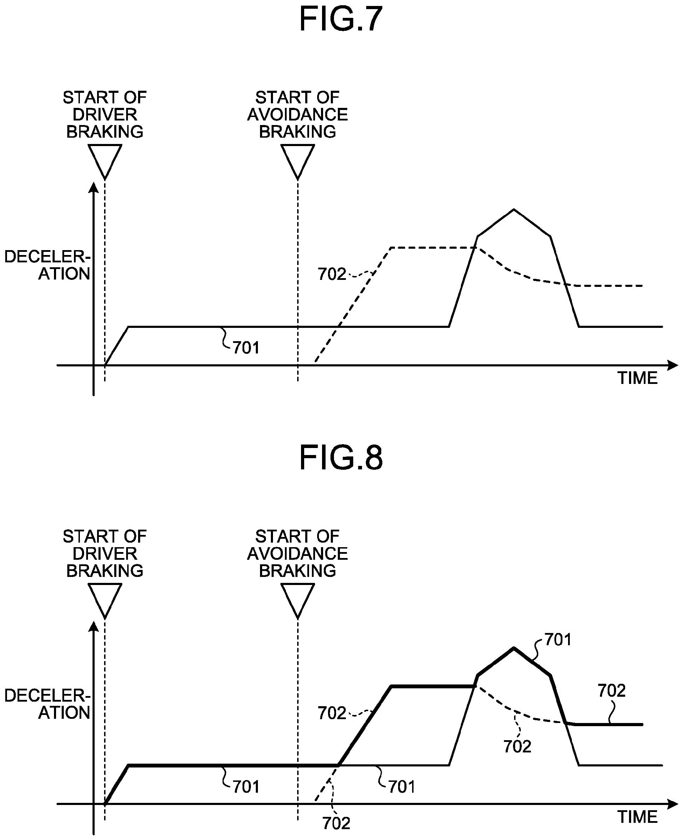

FIG. 7 is a diagram separately illustrating examples of changes in the deceleration required by the avoidance braking and in the required deceleration by the operation of the brake pedal BP by the driver according to the present embodiment. In FIG. 7, the horizontal axis represents time, and the vertical axis represents the deceleration. As illustrated in FIG. 7, upon start of the driver's operation of the brake pedal BP for braking, a required deceleration 701 (driver-required deceleration 701) by the operation of the brake pedal BP changes differently from a deceleration 702 by the avoidance braking.

FIG. 8 is a diagram illustrating an example of a change in deceleration under the control according to the present embodiment. Assumed that the driver-required deceleration 701 and the deceleration 702 by the avoidance braking show the changes as illustrated in FIG. 7. Under the control of the present embodiment, when the operation of the brake pedal BP coincides with the activation of the avoidance braking, the braking force is output based on a larger one of the driver-required deceleration and the deceleration of the avoidance braking, as indicated by the thick line. That is, as illustrated in FIG. 8, while the driver has started braking with the brake pedal BP and the avoidance braking is yet to be activated, the braking force is output based on the driver-required deceleration 701. Upon activation of the avoidance braking, the deceleration 702 rises. When the deceleration 702 exceeds the driver-required deceleration 701, the braking force is output based on the deceleration 702 of the avoidance braking. When by the driver's additionally stepping on the brake pedal BP, the driver-required deceleration 701 increases to above the deceleration 702 by the avoidance braking, the braking force is output based on the driver-required deceleration 701.

As described above, the present embodiment does not end or inhibit the avoidance braking, even with simultaneous brake applications by the driver's operation of the brake pedal BP and the avoidance braking. In addition, in the present embodiment, the collision avoidance controller 66 controls the brake ECU 12 to output the braking force based on the larger one of the deceleration of the avoidance braking and the required deceleration by the operation of the brake pedal BP by the driver. As a result, according to the present embodiment, when the driver-required braking force is larger than that by the avoidance breaking, the driver-required braking force is applied to the vehicle 100, which can decelerate the vehicle 100 according to the intention of the driver.

In the present embodiment, even when the brake pedal BP is operated during the avoidance braking, the avoidance braking is not ended to complement insufficient braking force through the driver's operation of the brake pedal BP for avoiding the preceding vehicle. Thus, for outputting the braking force of the avoidance braking which is larger than the braking force through the operation of the brake pedal BP, the required deceleration can be quickly produced without a delay in the response of the pressure pump during the avoidance braking.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions

EXPLANATIONS OF LETTERS OR NUMERALS

| | |
|---|---|
| 12 | Brake electronic control unit (ECU) |
| 13 | Engine ECU |
| 20 | Engine |
| 30 | Brake controller |
| 40 | Control device |
| 41 | (41fr, 41fl, 41rr, and 41rl) Wheel speed sensors |
| 42 | Brake switch |
| 43 | Front-rear directional acceleration sensor |
| 44 | Accelerator pedal stroke sensor |
| 60 | Collision avoidance ECU |
| 61 | Determiner |
| 62 | Alarm controller |
| 63 | Notification controller |
| 64 | Avoidance braking controller |
| 65 | Storage |
| 66 | Collision avoidance controller |
| 100 | Vehicle |

**Claims**

1. A collision avoidance device comprising:

a collision avoidance executor that can execute avoidance braking for a vehicle to avoid collision with an object to be avoided;
a determiner that determines whether a brake pedal is operated by a driver; and
a collision avoidance controller that inhibits execution of the avoidance braking from ending and controls braking to apply a brake with a larger one of a required braking force through the operation of the brake pedal and a braking force by the avoidance braking, when the driver operates the brake pedal during the avoidance braking.

2. The collision avoidance device according to claim 1, wherein the collision avoidance controller further inhibits, when the brake pedal is operated during the avoidance braking, ending of an issuance of a notification that the avoidance braking is to be applied.

3. The collision avoidance device according to claim 1, wherein the collision avoidance controller further inhibits or ends, when the brake pedal is operated during the avoidance braking, an issuance of an alarm that the avoidance braking needs to be applied.

**Amended claims under Art. 19.1 PCT**

**1.** (Amended) A collision avoidance device comprising:

a collision avoidance executor that can execute avoidance braking for a vehicle to avoid collision with an object to be avoided;
a determiner that determines whether a brake pedal is operated by a driver; and
when the driver operates the brake pedal during the avoidance braking, a collision avoidance controller that inhibits execution of the avoidance braking from ending and controls braking to apply a brake with a larger one of a required braking force through the operation of the brake pedal and a braking force by the avoidance braking, further inhibits ending of an issuance of a notification that the avoidance braking is to be applied, and inhibits or ends an issuance of an alarm that the avoidance braking needs to be applied

**Statement under Art. 19.1 PCT**

Claim 1 is amended to incorporate original Claims 2 and 3.
Claims 3 and 4 are canceled.

# FIG.1

EP 3 225 474 A1

# FIG.2

COLLISION AVOIDANCE ECU 60

DETERMINER 61 — STORAGE 65

COLLISION AVOIDANCE CONTROLLER 66

ALARM CONTROLLER 62

NOTIFICATION CONTROLLER 63

AVOIDANCE BRAKING CONTROLLER 64

FIG.3

```
                    ┌─────────────┐
                    │    START    │
                    └──────┬──────┘
                           │            ⌐S11
                    ┌──────▼──────┐
                    │ CALCULATE TTC │
                    └──────┬──────┘
                           │            ⌐S12
                       ◇───────────◇
                      IS              YES     ┌──────────────┐
              (TTC≤AVOIDANCE ────────────────►│   ACTIVATE   │ ⌐S13
              BRAKING THRESHOLD)              │  AVOIDANCE   │
                  SATISFIED?                  │   BRAKING    │
                       ◇───────────◇          └──────┬───────┘
                           │ NO
                           │            ⌐S14
                       ◇───────────◇
                      IS              YES
              (TTC≤NOTIFICATION ──────────────┐
                 THRESHOLD)                    │
                  SATISFIED?              ┌────▼─────┐
                       ◇───────────◇      │  ISSUE   │ ⌐S15
                           │ NO           │NOTIFICATION│
                           │              └────┬─────┘
                           │            ⌐S16
                       ◇───────────◇
                      IS              YES
              (TTC≤ALARM THRESHOLD) ───────────┐
                  SATISFIED?                    │
                       ◇───────────◇      ┌────▼─────┐
                           │ NO           │ISSUE ALARM│ ⌐S17
              ┌────────────▼───────┐      └────┬─────┘
              │ DETERMINE WHETHER TO│ ⌐S18      │
              │  CONTINUE ALARM,    │           │
              │NOTIFICATION, OR AVOIDANCE│      │
              │     BRAKING         │           │
              └────────────┬───────┘           │
                           │◄──────────────────┘
                           │            ⌐S19
              ┌────────────▼───────┐
              │ DETERMINE WHETHER TO│
              │INHIBIT OR END EXECUTION│
              │OF COLLISION AVOIDANCE│
              │     FUNCTION        │
              └────────────┬───────┘
                    ┌──────▼──────┐
                    │     END     │
                    └─────────────┘
```

# FIG.4

# FIG.5

# FIG.6

```
                    ┌─────────────┐
                    │    START    │
                    └─────────────┘
                           │
                           ▼
              ╱─────────────────────╲  ~S31
             ╱   IS BRAKE PEDAL       ╲───────── NO ──────────────┐
             ╲    OPERATED?           ╱                           │
              ╲─────────────────────╱                            │
                       │ YES                                      │
                       ▼         ~S32                             │
              ┌─────────────────────────┐                        │
              │ INHIBIT OR END ISSUANCE  │                        │
              │        OF ALARM          │                        │
              └─────────────────────────┘                        │
                       │         ~S33                             │
                       ▼                                          │
              ┌─────────────────────────┐                        │
              │ DO NOT INHIBIT OR END    │                        │
              │ ISSUANCE OF NOTIFICATION │                        │
              └─────────────────────────┘                        │
                       │         ~S34                             │
                       ▼                                          │
              ┌─────────────────────────┐                        │
              │  DO NOT INHIBIT OR       │                        │
              │  END EXECUTION OF        │                        │
              │  AVOIDANCE BRAKING       │                        │
              └─────────────────────────┘                        │
                       │                                          │
                       ▼                                          │
              ╱─────────────────────╲  ~S35                       │
             ╱          IS            ╲                           │
            ╱   (DECELERATION          ╲                          │
           ╱  OF AVOIDANCE BRAKING      ╲── YES ──────────────┐  │
           ╲  >DRIVER-REQUIRED          ╱                     │  │
            ╲   DECELERATION)          ╱                      │  │
             ╲   SATISFIED?           ╱                       │  │
              ╲─────────────────────╱                        │  │
                       │ NO       ~S36                        │  │ ~S37
                       ▼                                      ▼  ▼
              ┌─────────────────────────┐      ┌─────────────────────────┐
              │ OUTPUT DRIVER-REQUIRED   │      │ OUTPUT BRAKING FORCE OF  │
              │     BRAKING FORCE        │      │   AVOIDANCE BRAKING      │
              └─────────────────────────┘      └─────────────────────────┘
                       │                                      │
                       ▼◄─────────────────────────────────────┘
                    ┌─────────────┐
                    │   RETURN    │
                    └─────────────┘
```

# FIG.7

START OF
DRIVER
BRAKING

START OF
AVOIDANCE
BRAKING

DECELER-
ATION

702

701

TIME

# FIG.8

START OF
DRIVER
BRAKING

START OF
AVOIDANCE
BRAKING

DECELER-
ATION

702

702

701

702

701

701

702

702

TIME

## INTERNATIONAL SEARCH REPORT

| International application No. |
| --- |
| PCT/JP2015/083507 |

A.  CLASSIFICATION OF SUBJECT MATTER
*B60T8/00*(2006.01)i, *B60T7/12*(2006.01)i, *B60W30/08*(2012.01)i, *G08G1/16*
(2006.01)i

According to International Patent Classification (IPC) or to both national classification and IPC

B.  FIELDS SEARCHED

Minimum documentation searched (classification system followed by classification symbols)
B60T8/00, B60T7/12, B60W30/08, G08G1/16

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2011-183983 A  (Toyota Motor Corp.), 22 September 2011 (22.09.2011), paragraphs [0001] to [0005], [0037], [0039] to [0040], [0047] to [0050]; fig. 2 (Family: none) | 1-3 |
| A | JP 2002-225689 A  (Nissan Motor Co., Ltd.), 14 August 2002 (14.08.2002), (Family: none) | 1-3 |

☐   Further documents are listed in the continuation of Box C.          ☐   See patent family annex.

*    Special categories of cited documents:
"A"  document defining the general state of the art which is not considered    to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
| --- | --- |
| 18 February 2016 (18.02.16) | 01 March 2016 (01.03.16) |

| Name and mailing address of the ISA/ Japan Patent Office 3-4-3,Kasumigaseki,Chiyoda-ku, Tokyo 100-8915,Japan | Authorized officer  Telephone No. |
| --- | --- |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S55015337 B
- JP 8119004 A
- JP 2012121534 A